# EUROPEAN PATENT APPLICATION

(11) **EP 4 382 893 A1**
(43) Date of publication of application: **12.06.2024**
(21) Application number: 23213545.9
(22) Date of filing: 30.11.2023
(51) Int. Cl.: G01N 21/72, F23N 5/08, G01J 3/443

(54) **SPECTRAL FLAME MEASUREMENTS OF INDUSTRIAL FLAMES**

(30) Priority: 05.12.2022 US 202263430218 P; 20.11.2023 US 202318514520
(71) Applicant: Baker Hughes Holdings LLC, Houston, TX 77073 (US)
(72) Inventor: PRCHLIK, Jakub, Houston, 77073 (US); MCKINNEY, Kevin, Houston, 77073 (US); SPALDING, Michael, Houston, 77073 (US); LAMBACH, Kenneth, Houston, 77073 (US); SUNG, Chih-Jen, Houston, 77073 (US); STEVENS, James, Houston, 77073 (US); FANG, Rouzhou, Houston, 77073 (US); TWAROG, Kyle, Houston, 77073 (US)
(74) Representative: Illingworth-Law, William Illingworth

(57) **Abstract**

A system (100) and method (400) for characterizing spectral emission include receiving data characterizing spectral emission from a flame (410), wherein the data includes a range of wavelengths and a corresponding range of intensities, determining one or more functions (420) to analyze the data, determining (430), based on the one or more functions, a peak subset of the data and determining (440), based on the peak subset, one or more parameters of interest.

## Description

### RELATED APPLICATION

This application claims priority under 35 U.S.C. 9 119(e) to U.S. Provisional Application No. 63/430,218 filed December 5, 2022, the entire contents of which are hereby expressly incorporated by reference herein.

### BACKGROUND

Spectrometers are apparatuses used for detecting, recording, and measuring spectra emanating from a light source (e.g., a flame). Spectrometers can be used in a variety of industrial applications and can be coupled to data processors in order to provide users with information about the spectra emanating from the light source. Current flame detectors used to monitor flames use low resolution photodiodes to characterize the flames. Photodiodes have limited band pass ranges (e.g. around 300 nm for SiC) and are spectrally unresolved. Due to the low resolution, photodiodes are only capable of providing spectral data over a narrow wavelength range. As such, the information about the flame that may be derived from the photodiode is limited. In combustion applications, it can be necessary for combustion system operators to be able to make informed decisions concerning the operation of their turbines on both short term and long-term timelines based on dynamic information available in the flames of the combustor.

Spectral emission is made up of multiple components. One of the dominant components being thermal or blackbody emission. The basis of thermal or blackbody emission is that as objects get hotter, the peak wavelength of light that the object emits decreases, while the peak intensity increases. The wavelengths and intensities that objects emit under different temperature conditions stem from the object's atomic structure. Different atomic structures have inherent atomic electronic energy levels that are discrete in nature and well known. By understanding the wavelength and intensity properties of different atomic and molecular structures of compounds present in combustion reactions under different temperature conditions, one can characterize the combustion.

Spectral emission from molecules is very similar to the atomic emission described above, except that the spacing between detected spectral peaks is less (i.e. the emission is associated with a broader range of wavelengths). As such, molecular emission typically occurs in spectral bands as opposed to the spectral line emissions seen on the atomic level.

### SUMMARY

In one aspect, a method for determining parameters of interest from one or more power generating flames is provided. In an embodiment, the method can include receiving, from a spectral sensor, a data set characterizing spectral emission from a flame, wherein the data comprises a range of wavelengths and a corresponding range of intensities. The method can also include determining one or more functions to reduce the data, determining, based on the one or more functions, a baseline emission subset of the data and a peak subset of the data and determining, based on the peak subset of the data, one or more parameters of interest.

One or more variations of the subject matter herein are feasible. For example, in one embodiment, the peak subset can be determined by subtracting the baseline emission subset from the data set. In another aspect, spectral sensor can have a spectral resolution of less than 20nm, a maximum signal-to-noise ratio greater than 200, a wavelength drift of less than 0.3nm, and a relative stability between spectral features of less than 5%.

In another aspect, the peak subset of the data can include data characterizing one or more peaks of spectral emission at one or more wavelengths within the range of wavelengths and one or more intensities at each of the corresponding one or more wavelengths. In another aspect, the method can further include comparing the one or more peaks of spectral emission to one or more predetermined parameters of interest.

In another aspect, the one or more parameters of interest can include one or more long-term parameters of interest including any of a Nitrogen Oxide emission, a Carbon Oxide emission and an alkali content. In another aspect, the one or more parameters of interest can include one or more dynamic parameters of interest including any of a combustion temperature, an air-fuel ratio, a hydrogen-methane concentration and combustion acoustics.

In some aspects, the method can further include providing the one or more parameters of interest to a user interface display. In some embodiments, the providing can further include providing a dynamic plot of a continuum of the range of wavelengths versus the range of intensities as they dynamically change with respect to time.

In another aspect, a system for determining parameters of interest from one or more power generating flames is provided. In an embodiment, the system can include a spectral sensor arranged to acquire data characterizing spectral emission from a flame, wherein the data includes a range of wavelengths and a corresponding range of intensities. The system can also include a computing device including at least one data processor and a memory storing instructions which, when executed by the at least one processor, cause the at least one processor to perform operations including receiving the data from the spectral sensor, determining one or more functions to reduce the data, determining, based on the one or more functions, a baseline emission subset of the data and a peak subset of the data and determining, based on the peak subset of the data, one or more parameters of interest.

One or more variations of the subject matter herein are feasible. For example, in one embodiment, the peak subset can be determined by subtracting the baseline emission subset from the data set. In another aspect, the spectral sensor can have a spectral resolution of less than 20nm, a maximum signal-to-noise ratio greater than 200, a wavelength drift of less than 0.3nm, and a relative stability between spectral features of less than 5%.

In another aspect, the peak subset of the data includes data characterizing one or more peaks of spectral emission at one or more wavelengths within the range of wavelengths and one or more intensities at each of the corresponding one or more wavelengths.

In another aspect, the processor is further arranged to perform operations including comparing the one or more peaks of spectral emission to one or more predetermined parameters of interest. In one aspect, the one or more parameters of interest can include one or more long-term parameters of interest including any of a Nitrogen Oxide emission, a Carbon Oxide emission and an alkali content. In another aspect, the one or more parameters of interest can include one or more dynamic parameters of interest including any of a combustion temperature, an air-fuel ratio, a hydrogen-methane and combustion acoustics.

In another embodiment, the system can further include a user interface display communicatively coupled to the computing device, wherein the processor is further configured to provide the one or more parameters of interest to the user interface display. In another aspect, the providing can further include providing a dynamic plot of a continuum of the range of wavelengths versus the range of intensities as they dynamically change with respect to time. In some aspects, the one or more functions are stored within the memory and further comprise one or more machine learning algorithms.

In another aspect, the system can further include a light transmitting device arranged to transmit light from a combustion chamber to the spectral sensor and an analog to digital converter communicatively coupled to the spectral sensor and the computing device.

### DESCRIPTION OF DRAWINGS

These and other features will be more readily understood from the following detailed description taken in conjunction with the accompanying drawings, in which:
FIG. 1 is a system diagram illustrating an example configuration for a system for determining parameters of interest for an industrial flame as described herein;
FIG. 2 is a graph illustrating exemplary emissions from gaseous fuel flames that can be monitored by spectral sensors of the systems described herein;
FIGS. 3A-3D illustrate an example of a spectral flame emission as it evolves over time;
FIG. 4 is an flow diagram of method for characterizing a spectral flame emission described herein;
FIG. 5 illustrates an example of parameters of interest that can be provided by the system during a combustion operation;
FIG. 6 illustrates a magnified snapshot of the same spectral flame emission illustrated by FIGS. 3A-3D;
FIG. 7 is an exemplary graph illustrating a Sodium contamination concentration in a plurality of laboratory flames;
FIG. 8 is an exemplary statistical model illustrating results of an ordinary least squares (OLS) regression run on the data from FIG. 7;
FIG. 9 is an exemplary plot illustrating the OLS regression of FIG. 8 of temperature as a function of an OH intensity ratio as measured in a laboratory flame;
FIG. 10 is an exemplary plot illustrating predicted performance of the combustor as a function of concentration error for the data of FIG. 7 using the temperature adjustment provided by the OLS regression of FIG. 8;
FIG. 11 is an exemplary graph illustrating different spectral emissions plotted for a plurality of equivalence ratios for premixed CH₄ laboratory flames and Methane/Hydrogen premixed flames;
FIG. 12 is an exemplary graph illustrating a variation in a baseline continuum level with different fuel compositions for the same fuel-to-air ratio;
FIG. 13A is an exemplary graph illustrating spectral features' sensitivity to pressure;
FIG. 13B is an exemplary graph illustrating how ratios of temperature and pressure can be used to determine temperature of the combustion; and
FIG. 14 is a block diagram of an example architecture of a computing system(s) or device(s) described herein.

It is noted that the drawings are not necessarily to scale. The drawings are intended to depict only typical aspects of the subject matter disclosed herein, and therefore should not be considered as limiting the scope of the disclosure.

### DETAILED DESCRIPTION

Current Reuter-Stokes (RS) photodiode flame sensors are sensitive only in the UV region between 200 and 400 nm. In combustion applications, it can be desirable to have a sensor capable of resolving wavelengths in order to measure a plurality of parameters of interest, including flame temperature, combustion efficiency, sooting, fuel-to-air ratio, and/or plurality of combustion contaminants or emissions in a combustion operation. As such, the information about a flame that may be derived from photodiodes is limited.

Additionally characterizing spectral emission from objects can describe how objects emit light (i.e., chemiluminescence). Spectral emission from molecules is very similar to the atomic emission, except that the spacing between detected spectral peaks is less (i.e. the emission is associated with a broader range of wavelengths). As such, molecular emission typically occurs in spectral bands as opposed to the spectral line emissions seen on the atomic level. These bands can blur spectral features, making it difficult to characterize the features using sensors having larger spectral resolutions, for example, spectral resolutions greater than 20 nanometers.

In combustion system applications, operators have the ability to vary many inputs of a combustor in order to change various characteristics of the combustion. As such, it can be essential for combustor operators to be able to make informed decisions concerning the operation of the combustor. Various measures of combustion data such as flame temperature, chamber pressure, combustion efficiency, sooting, fuel-air ratio, and/or the presence of various fuel contaminates or emissions can be necessary to monitor and operate combustors effectively for optimal performance. Current systems and methods of spectral sensing flame characterization do not provide combustor operators with the combustion data described above in a near real-time, actionable format that enables the operators to perform efficient operation of a combustor and to accurately predict emission performance over a longer period of time based on the above mentioned parameters of interest.

The systems and methods described herein address the aforementioned shortcomings. For example, one or more embodiments of a system for characterizing spectral emission can include a broadband, moderate resolution (i.e. between 0.5 and 20 nanometers), UV-Optical-NIR (or any combination thereof) spectrometer coupled to a first end of a fiber optic cable. The fiber optic cable can be coupled at a second end to a light concentrating lens configured to look into a combustor (i.e. an industrial gas turbine) to receive light characterizing the combustion flame and concentrate and transmit that light to the spectrometer via the fiber optic cable. Upon receiving the light from the flame, the spectrometer can be configured to convert the light into a digital data stream. The digital data stream can be sent to a computing device including at least one data processor with instructions stored on a memory thereof for carrying out algorithms to calculate, from the data, a plurality of parameters of interest. In some embodiments, the plurality of parameters of interest can include a flame temperature, a combustion efficiency, sooting, fuel-to-air ratio, and/or a plurality of combustion contaminants or emissions in a combustion operation. The digital output of the spectrometer can allow for rapid post-processing of spectral data.

The systems and methods described herein advantageously provide combustor operators with dynamic information regarding the plurality of parameters of interest. The systems and methods described herein can constantly monitor changes in flame temperature, combustion efficiency, sooting, fuel-air ratio, and combustion contaminants or emissions and provide this information to operators almost instantaneously. By providing flame characterization information to operators almost instantaneously, the systems and methods described herein enable operators to quickly adapt changes in operation conditions in order to optimize combustion.

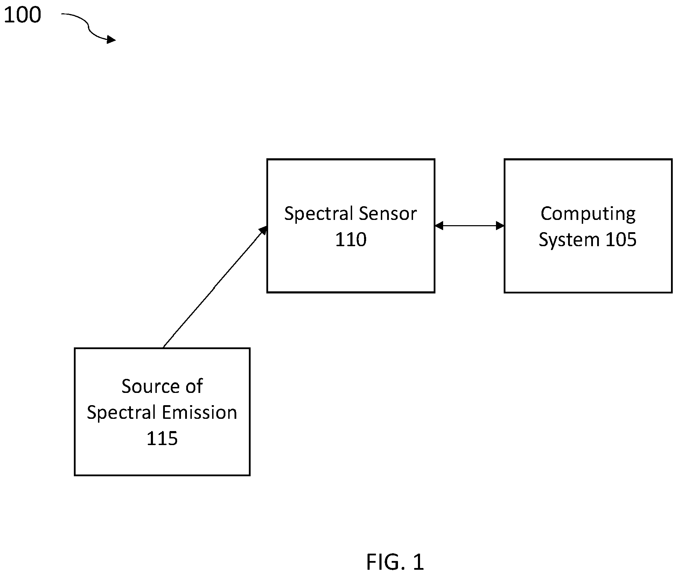

FIG. 1 is a system diagram 100 illustrating an example configuration for a system for determining parameters of interest for an industrial flame as described herein. In some embodiments, the system 100 can include a computing device 105 and a spectral sensor 110 (e.g., a broad band spectrometer) which can be coupled to a source of spectral emission 115 (e.g., a combustion can or the like) via a light concentrating device and a fiber optic cable (not shown). In some embodiments, the computing device 105 can include at least one or more processors, a memory configured store a plurality of spectral characterization algorithms and an integrator, as discussed in greater detail below. In some embodiments, the spectral sensor 110 can be a broad-band spectrometer configured to support a subset of wavelengths between 200 and 1200 nm and can be configured to have a wavelength resolution of less than 20 nm but greater than 0.5 nm. Further, in some embodiments, multiple spectrometers can also be deployed to cover the entire range of interest if needed. illustrates how wavelength stability of the spectrometer impacts the system's accuracy at predicting the equivalence ratio. In some aspects, the spectral sensor 110 sensor can also be selected to have a maximum signal-to-noise ratio (SNR) of 200. Additionally, in some aspects, the spectral sensor 110 sensor can also be resistant to thermal expansion. Further, in some embodiment, the computing device 105 can be configured to correct for thermal expansion via a calibration process using one or more predefined emission sources. The spectral sensor 110 can also be resistant to thermal and physical vibration and have a stable source (a source which has constant intensity ratios as a function of wavelength). In this case, the computing device 105 can also be configured to correct for error and/or drift in the intensity due to thermal and physical vibration via a calibration process using one or more predefined emission sources.

The system and methods described herein can also be configured to utilize a discrete UV detector and/or a discrete IR detector in combination with the broad-band spectrometer to cover additional wavelength ranges as can be desirable in certain applications. An example of a UV detector that can be used is a silicon carbide (SiC) devices for UV flame on/off detection. IR devices can be used for example, for flame flicker detection.

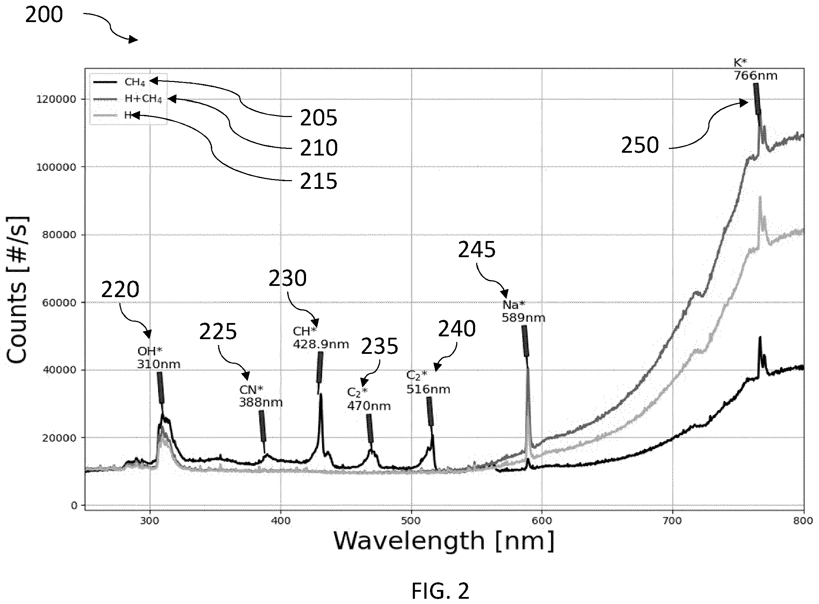

In the fields of gaseous fuel combustion, emissions from gaseous fuel flames monitored by spectral sensors can be visualized as discrete emission peaks on top of a baseline emission continuum as shown, for example, graph 200 of FIG. 2. FIG. 2 is a graph 200 illustrating exemplary emissions from gaseous fuel flames 205-215 that can be monitored by spectral sensors of the systems described herein. Emission features 220-250 of FIG. 2 are examples of naturally luminescing molecules and atoms (e.g., OH*, CN*, CH*, C2*m Na*, K*) in combustion reaction from the gaseous fuel flames 205-215. The emission intensity of these features 220- 250 and atoms are driven by the chemical reactions occurring in the flames 205-215. Accordingly, in some aspects of the systems and methods described herein, it is realized that the intensities of each of the emission features 220-250 for each flame 205-215, can be compared to one another to determine ratios of the emission features 220-250 which can be used as indicators for parameters of interest for the flames. These ratios can be used to derive fundamental inputs for each flame 205-215. Such inputs include but are not limited to the fuel-to-air ratio, contamination levels, and the temperature of the flame.

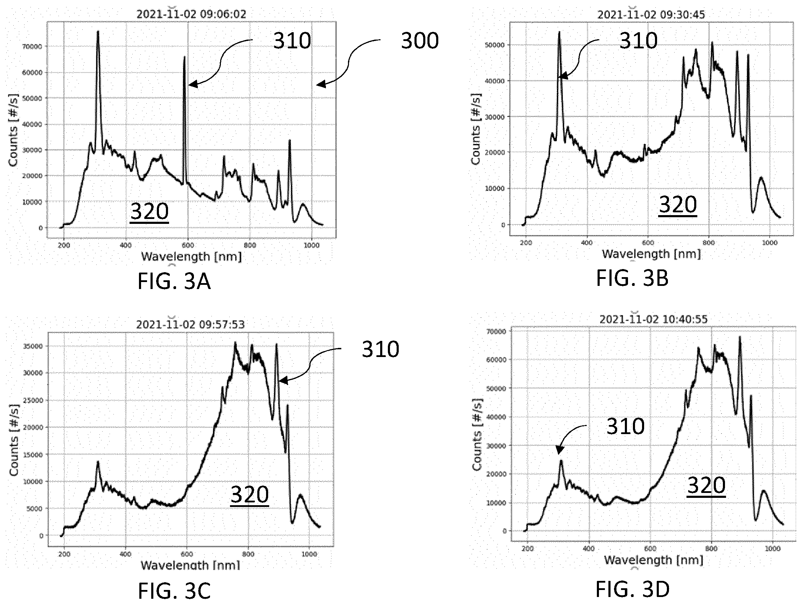

FIGS. 3A-3D illustrate an example of a spectral flame emission 300 as it evolves over time. FIGS. 3A-3D illustrate graphs of a spectral flame emission 300 taken at 4 different sampling times. The graph can be updated dynamically, for example, once every millisecond. FIGS. 3A-3D indicate that spectral features are not static, but rather, change constantly dependent, for example, on combustion inputs, combustion temperature, and other factors. As seen in FIGS. 3A-3D, the spectral emission 300 evolves from being dominated by UV emission (FIG. 3A) to being dominated by IR emission (FIG. 3D). Further, as seen in FIGS. 3A, the spectral flame emission 300 shows a plurality of variable, time dependent spectral peaks 310 on top of a variable, time dependent baseline emission continuum 320. While only one peak is indicated in FIGS. 3A-3D, it should be noted that the peak subset 310 includes all peaks extending above the baseline continuum 320.

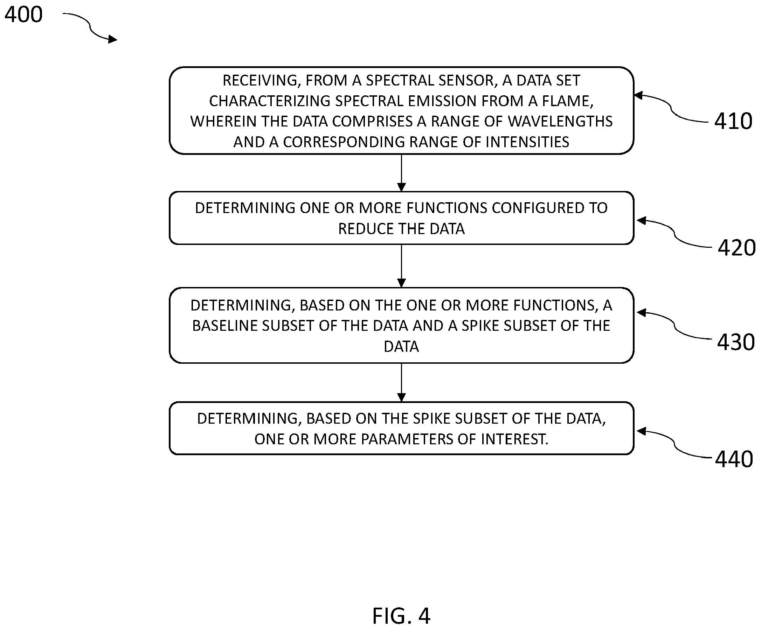

Traditional methods of characterizing a spectral peak 310 over a discrete wavelength range include the use of physical filters and integrators that simply count up all of the photon data within the discrete wavelength range and use that quantity to characterize the peak 310. The problem with the traditional method is that the discrete portion of the photon data below the peak 310, that constitutes part of the baseline 320 is included in this sum. This can be problematic, as the portion of the photon data below the peak 310, that constitutes part of the baseline 320 is not present due to any properties that may have created the peak 310. Accordingly, it can be desirable to remove the baseline 320 when analyzing the plurality of peaks 310 for combustion characteristics. As such, a new method of characterizing a spectral flame emission is described below in relation to FIG. 4.

FIG. 4 is a diagram of an example method 400 of characterizing a spectral flame emission. Method 400 can include a first step 410 of receiving from a spectral sensor, a data set characterizing spectral emission from a flame. The data set can include a range of wavelengths and a corresponding range of intensities. In some embodiments, the spectral emission can be received the spectral sensor via a light concentrating device. In some embodiments, the light concentration device can have a spectral wavelength range of 200-1200 nm, or any subset thereof, and can operate in environments of up to 325 degrees C. In some embodiments, the light transmitting device can be a fiber optic cable and in some embodiments the light transmitting device can operate in environments of up to 350 degrees C. the light transmitting device transmitting the spectral emission via the light transmitting device, to a broad-band spectrometer. In some embodiments the spectrometer can have a resolution between 0.5-20 nm.

Method 400 can further include a step 420 of determining, by at least one processor of a computing device, one or more functions configured to reduce the data. The computing device includes the at least one processor, a memory configured store a plurality of spectral characterization algorithms and an integrator. In some embodiments, the processor can be configured to determine the one or more functions based on the plurality of algorithms stored on the memory. In some embodiments the step of determining one or more functions for reducing data can further include steps of constructing a database, computing local statistics, defining a fitting function, fitting spectral peaks, plotting spectral information and/or products, and saving data. In some embodiments, the plurality of algorithms stored on the memory can include machine learning and/or artificial intelligence models.

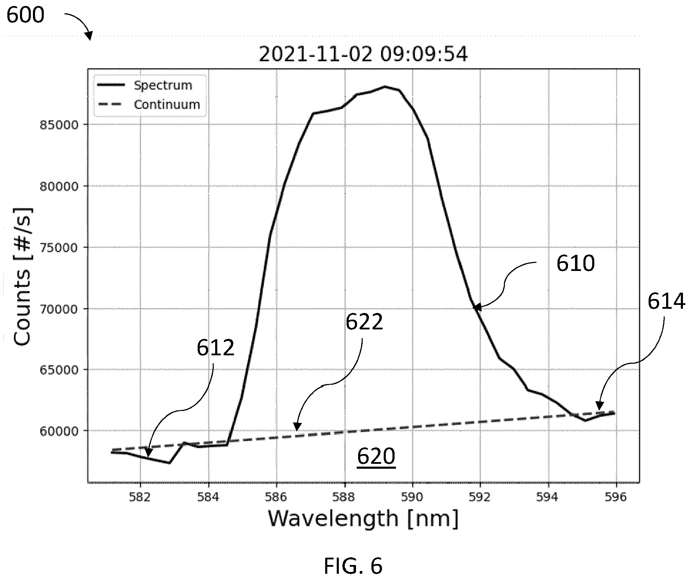

Method 400 can further include a step 430 of determining, based on the one or more functions, a baseline emission subset of the data and a peak subset of the data. In some embodiments, determining a baseline emission subset of the data and a peak subset of the data includes performing fast compared, dynamic integrations on the digital signal representing the spectral data in order to determine and separate a baseline emission continuum from a plurality of peaks of the spectral flame emission (discussed below in relation to FIG. 6). In some embodiments, plurality of peaks of the spectral flame emission can represent areas of importance in determining of parameters of interest of the spectral emission.

Method 400 can further include a step 440 of determining, based on the peak subset of the data, one or more parameters of interest of the spectral emission. In some embodiments, the parameters of interest can include one or more long-term parameters of interest including at least one of a Nitrogen Oxide emission, a Carbon Oxide emission and an alkali content. In some embodiments, the parameters of interest can include one or more dynamic parameters of interest including at least one of a combustion temperature, a combustion efficiency, an air-fuel ratio, a hydrogen-methane concentration, combustion acoustics, sooting and/or a plurality of combustion contaminants or emissions in a combustion operation. In some embodiments the determining 440 can be done using spectral characterization algorithms stored on the memory. In some embodiments, the determining 440 can done by comparing the reduced spectral data to independently characterized parameters of interest. In some embodiments, the independently characterized parameters of interest can be produced through experimentation and modeling of spectral data collected from a plurality of laboratory flames. In some embodiments, determinations of multiple parameters of interest of the plurality of parameters of interest can be combined to determine additional parameters of interest. For example, a determined flame temperature and a determined fuel-air ratio can be used in combination to determine a regulated emission (e.g., NOₓ and CO).

Method 400 can further include a step 450 of providing the plurality of parameters of interest to a user interface communicatively coupled to the computing device. In some embodiments, the providing can include providing a dynamic plot of a continuum of photon counts present over a continuum of wavelengths that can be configured to dynamically change with respect to time, using the digital signal representing the spectral emission.

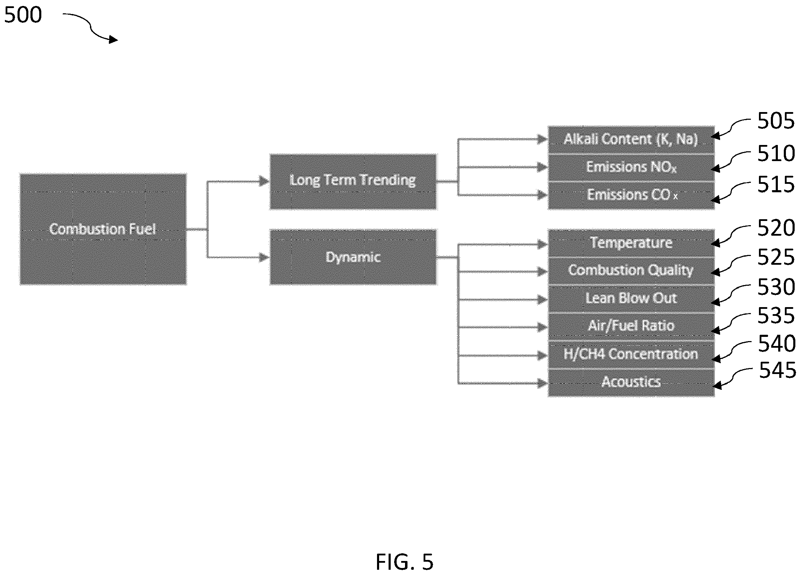

FIG. 5 illustrates an example 500 of the parameters of interest 505-545 that can be provided by the system regarding a presence of various combustion fuels (gas-based fuel) during a combustion operation. The data provided can include a plurality of long-term parameters of interest 505-515 and a plurality of dynamic parameters of interest 520-545. In some embodiments, the plurality of long-term parameters of interest can include an Alkali content, combustion efficiency, NOₓ emission, and CO emission. In some embodiments the Alkali content can be determined by Potassium and/or Sodium content, however, the Alkali content can also be determined by other Alkali metals that may be present during a combustion operation. In some embodiments, the plurality of dynamic parameters of interest can include a combustion temperature, a combustion efficiency, sooting, lean blowout, fuel-air ratio, an H/CH4 concentration, and/or an acoustic output. In some embodiments, the combustion fuels can include, for example, Hydrogen, Natural Gas, or the like.

FIG. 6 illustrates a localized snapshot of a graph of a spectral emission 600. For example, the spectral emission 600 can be a localized snapshot of the emissions illustrated by FIGS. 3A-3D. Snapshot 600 is zoomed in on a spectral peak 610 over a discrete wavelength range at single instance in time. The spectral characterization algorithms of the computing device described in relation to FIGS. 4-5 can be configured to perform fast compared, dynamic integrations of digital signal spectral data in order to determine and separate a baseline continuum 620 of the spectral emission 600 from a plurality of peaks 610 of the spectral flame emission 600. In some embodiments, the system described herein can be configured to determine the baseline continuum 620 by determining a first base 612 and a second base 614 of the peak 610, defined on each side of the peak 610, respectively. The system can further be configured determine a line of best fit 622 and determine the baseline continuum 620 as the region below the line 622. The system can further be configured to subtract the baseline continuum from the peak 610. Once the system subtracts the baseline continuum, the portion of the signal remaining can be integrated to determine an intensity of the peak 610.

By using the spectral characterization algorithms described, the computing device can more accurately determine and characterize the intensity and other features of the plurality of peaks 610. The algorithms described herein allow for near instantaneous spectral flame characterization. In some embodiments the algorithms described herein can further be configured to calculate ratios of a spectral flame emission at different points in time in order to predict various parameters of interest.

The systems and methods for characterizing spectral flame emission described herein can be used for near-real time monitoring of dynamically changing spectral emission over time. Near-real time monitoring of a dynamically changing spectral emission enables an operator to make informed modifications to the combustion to change an operation temperature, to modify a combustion efficiency, to modify fuel-air ratio, to modify regulated emissions, and/or to modify the amount of contaminants present in the combustion. Further, in some embodiments, the systems and methods described herein can be configured to store, in the memory of the computing device, historical spectral emission data generated by the computing device in order to provide the operator with long term trend data. Providing the operator with long term trend data informs the operator the efficiency of the combustion over time and allows the operator to make informed future emission predictions.

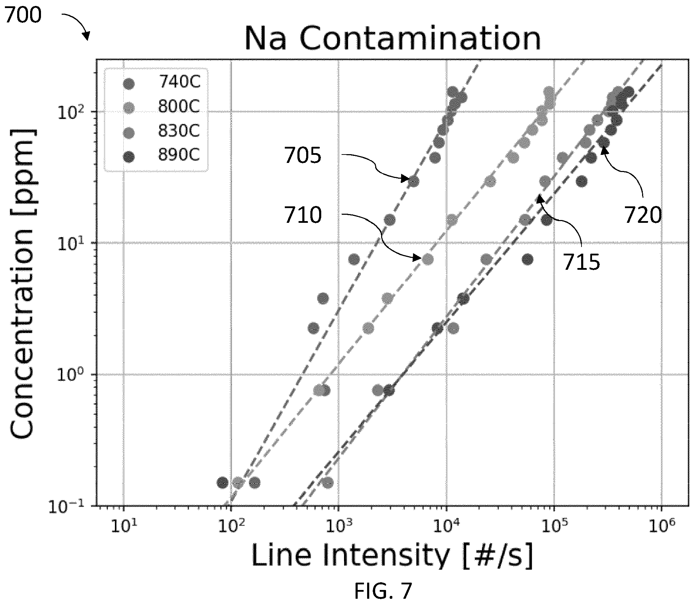

FIG. 7 illustrates an exemplary graph 700 of a Sodium contamination concentration in a plurality of laboratory flames. FIG. 7 plots Sodium contamination in parts per million as a function of line intensity in numbers of photons at a plurality of operating temperatures. When the data 705-720 in the graph is fit in log-log space per temperature, as shown, the fit can be linear. This type of coordinate transformation can be used to make a model that fits concentration in ppm as a function of line intensity and temperature.

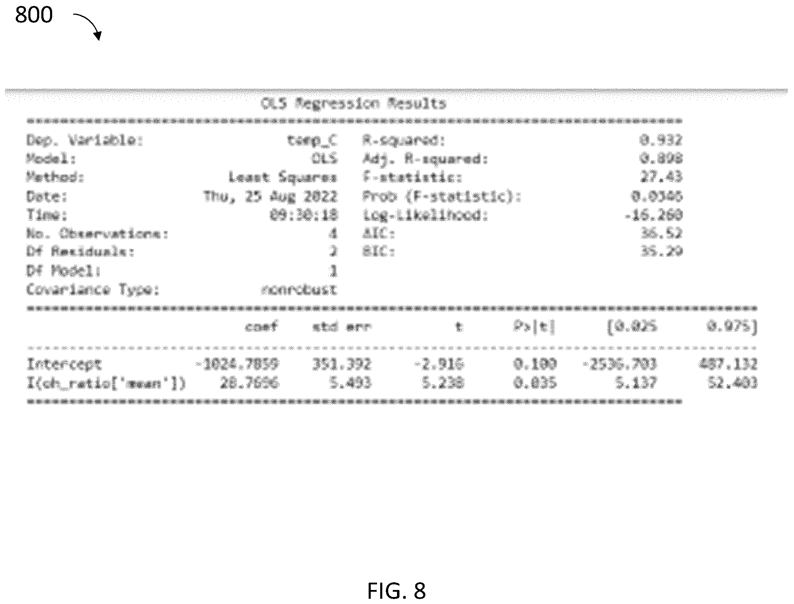

FIG. 8 illustrates an exemplary statistical model 800, showing results of an ordinary least squares (OLS) regression run on the data from FIG. 7. The statistical model ranks a variety of coefficients used in the regression for goodness of fit, significance of fit, and coefficient error. In some embodiments, the step 420 of FIG. 4 of determining one or more functions configured to reduce the data can include using an OLS regression as shown in FIG. 8.

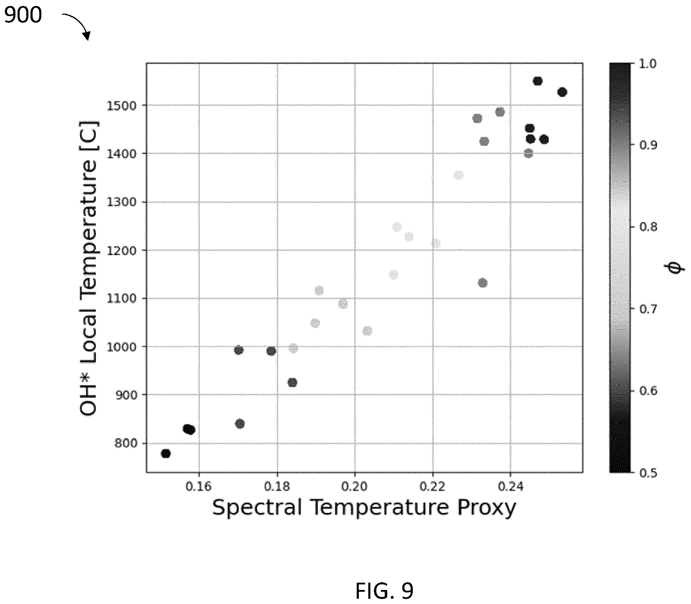

FIG. 9 illustrates a plot 900 of the OLS regression of FIG. 8 of temperature as a function of an OH intensity ratio. A best fit model can be defined and applied to the data in the plot using similar statistics to those previously defined in FIG. 8.

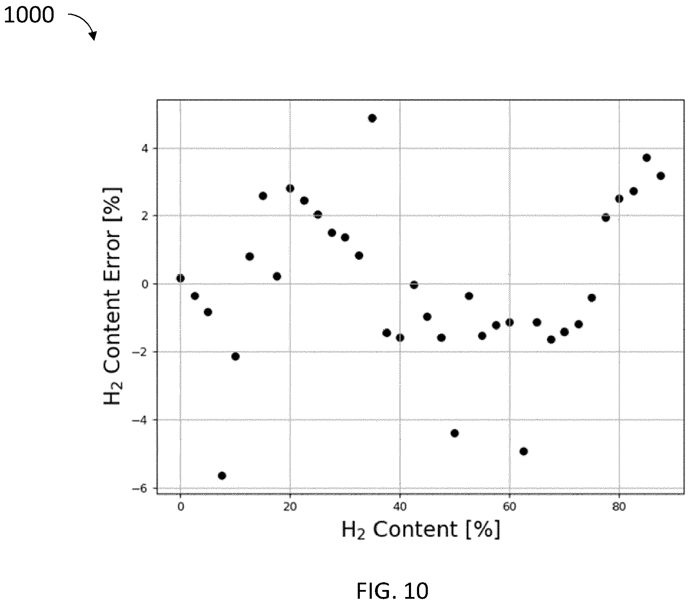

FIG. 10 illustrates an exemplary plot 1000 of predicted performance of the combustor as a function of concentration error for the data of FIG. 7 using the temperature adjustment provided by the OLS regression of FIG. 8. Since the data of FIG. 7 deals with orders of magnitude of ppm, the error in FIG. 10 is plotted as a percentage. As seen in FIG. 10, the errors provided can be approximately Gaussian in nature. In some embodiments, the concentration error can be calculated using a Root-Mean-Square (RMS) method.

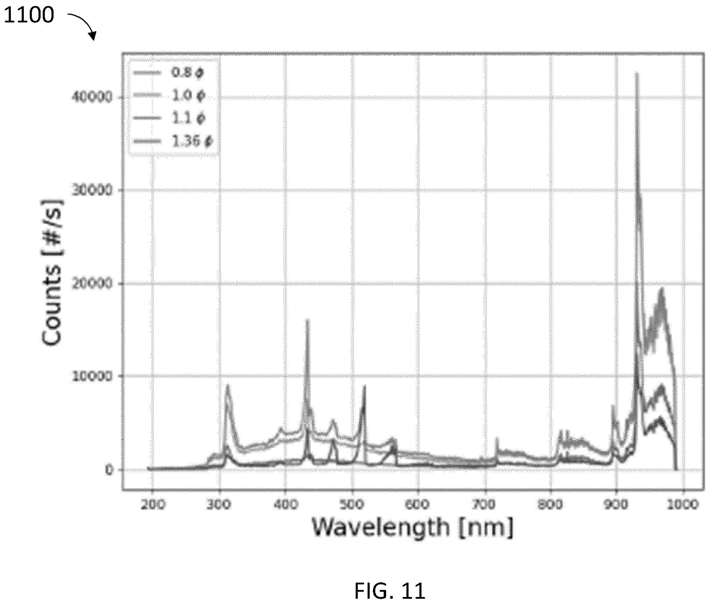

FIG. 11 illustrates a graph 1100 of four different equivalence ratio continuums plotted for a plurality of premixed CH₄ laboratory flames. The equivalence ratios are fuel to air ratios, and are plotted as a ratio of photons/sec counted as a function of wavelength. In some aspects, the equivalence ratio continuums of FIG. 11, or equivalence ratio continuums plotted for any other laboratory flame can be used to characterize spectral features of predetermined parameters of interest which can be used by the system described herein to compare to a flame being monitored in order to determine one or more parameters of interest of the flame being monitored.

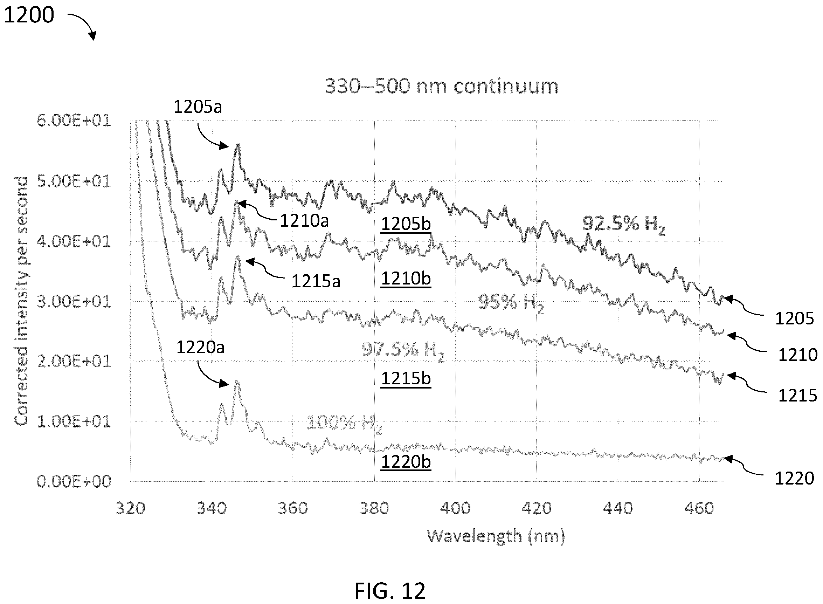

FIG. 12 is an exemplary graph 1200 illustrating a plurality of flames 1205-1220 having varying hydrogen fuel concentrations with respect to methane configured to illustrate benefits of the systems and methods described herein. In some aspects, the flames 1205-1220 have different fuel compositions and the same fuel-to-air ratio. As shown in FIG. 12, the plurality of flames 1205-1220 can portray a plurality of peaks 1205a-1220a, respectively, and each have a respective baseline continuum 1205b-1220b. For example, hydrogen fuel concentrations 1205 can have 92.5% H₂, hydrogen fuel concentrations 1210 can have 95% H₂, hydrogen fuel concentrations 1215 can have 97.5% H₂ and hydrogen fuel concentrations 1220 can have 100% H₂. Under traditional methods, for example, using a bandpass filter, one would determine that the intensity of the peak 1205a is significantly greater than the intensity of peak 1220a. However, this could be misleading. As shown in FIG. 2, the relative intensity of the peak 1205a relative to its baseline continuum 1205b is very similar to the relative intensity of the peak 1220a relative to its baseline continuum 1220b. In some aspects, these relative intensities can be valuable metrics for determining parameters of interest of combustion according to the systems and methods described herein. Accordingly, the systems and methods described herein can be configured to determine the plurality of spikes 1205a-1220a and the corresponding continuum levels 1205b-1220b and remove the continuum levels 1205b-1220b. This can allow for determination of parameters of interest using only the relevant peak data. This method cannot be achieved using a bandpass filter. Due to the variation in continuum levels in unrelated physical parameters, bandpass filters, which must include the continuum level in the counting of the feature, cannot be used to quantify the peak intensity from a baseline continuum, which is paramount for the systems and methods described herein.

The degeneracy of spectral outputs can be broken by the inclusion of external measurement devices into the system. External measurements include but are not limited to: process pressure, fuel flow rates, air flow rates, and inlet air temperature.

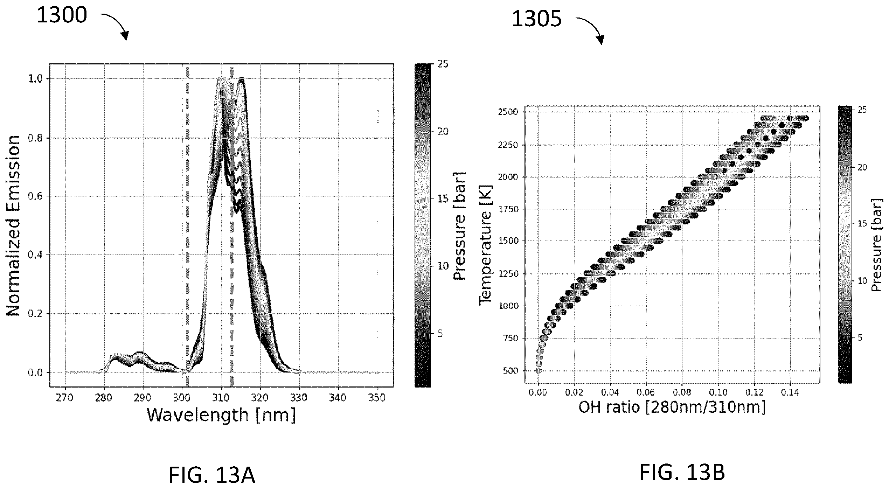

FIG. 13A is an exemplary plot 1300 illustrating simulated OH emission for a range of pressures at a constant temperature applicable to combustion. Specifically, FIG. 13A illustrates spectral features' sensitivity to pressure. For example, as shown in FIG. 13A, a shape of the normalized emission for the OH feature at 310nm changes from peaking near 308nm at low pressures and near 312nm at high pressures. Further, as shown in FIG. 13A, temperature measurements cannot be used over a wide range of operating pressures using a single unresolved spectral feature due to this change in emission shape of the 310nm feature. The single unresolved feature shows a significant change in the shape of the emission spike due to pressure variation at a single temperature. Instead, a combination of independently resolved spectral features of the same species are required to measure the temperature of the flame. The secondarily independently resolved spectral feature is required to break the degeneracy of the OH emission with temperature and pressure.

FIG. 13B is an exemplary plot 1305 illustrating how the ratio between those two resolved features at 310nm and 280nm, from FIG. 13A, can be used to measure temperature independent of process pressure. Using this information, so long as the variable continuum level can be removed as described above, a temperature measurement can be acquired by calibrating the ratios of these resolved spectral features to an independent temperature measurement.

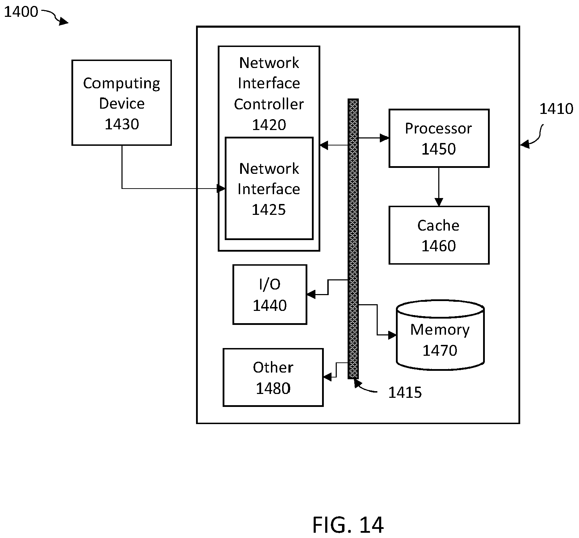

FIG. 14 is a block diagram 1400 of a computing device 1410 suitable for use in implementing the computerized components described herein, such as the computing device 105 of FIG. 1. In broad overview, the computing device 1410 includes at least one processor 1450 for performing actions in accordance with instructions, and one or more memory devices 1460 and/or 1470 for storing instructions and data. The illustrated example computing device 1410 includes one or more processors 1450 in communication, via a bus 1415, with memory 1470 and with at least one network interface controller 1420 with a network interface 1425 for connecting to external devices 1430, e.g., a computing device. The one or more processors 1450 are also in communication, via the bus 1415, with each other and with any I/O devices 1430 at one or more I/O interfaces 1430, and any other devices 1480. The processor 1450 illustrated incorporates, or is directly connected to, cache memory 1460. Generally, a processor will execute instructions received from memory. In some embodiments, the computing device 1410 can be configured within a cloud computing environment, a virtual or containerized computing environment, and/or a web-based microservices environment.

In more detail, the processor 1450 can be any logic circuitry that processes instructions, e.g., instructions fetched from the memory 1470 or cache 1460. In many embodiments, the processor 1450 is an embedded processor, a microprocessor unit or special purpose processor. The computing device 1410 can be based on any processor, e.g., suitable digital signal processor (DSP), or set of processors, capable of operating as described herein. In some embodiments, the processor 1450 can be a single core or multi-core processor. In some embodiments, the processor 1450 can be composed of multiple processors.

The memory 1470 can be any device suitable for storing computer readable data. The memory 1470 can be a device with fixed storage or a device for reading removable storage media. Examples include all forms of non-volatile memory, media and memory devices, semiconductor memory devices (e.g., EPROM, EEPROM, SDRAM, flash memory devices, and all types of solid state memory), magnetic disks, and magneto optical disks. A computing device 1410 can have any number of memory devices 1470.

The cache memory 1460 is generally a form of high-speed computer memory placed in close proximity to the processor 1450 for fast read/write times. In some implementations, the cache memory 1460 is part of, or on the same chip as, the processor 1450.

The network interface controller 1420 manages data exchanges via the network interface 1425. The network interface controller 1420 handles the physical, media access control, and data link layers of the Open Systems Interconnect (OSI) model for network communication. In some implementations, some of the network interface controller's tasks are handled by the processor 1450. In some implementations, the network interface controller 1420 is part of the processor 1450. In some implementations, a computing device 1410 has multiple network interface controllers 1420. In some implementations, the network interface 1425 is a connection point for a physical network link, e.g., an RJ 45 connector. In some implementations, the network interface controller 1420 supports wireless network connections via network interface port 1425. Generally, a computing device 1410 exchanges data with other network devices 1430, such as computing device 1430, via physical or wireless links to a network interface 1425. In some implementations, the network interface controller 1420 implements a network protocol such as LTE, TCP/IP Ethernet, IEEE 802.11, IEEE 802.16, or the like.

The other computing devices 1430 are connected to the computing device 1410 via a network interface port 1425. The other computing device 1430 can be a peer computing device, a network device, or any other computing device with network functionality. For example, a computing device 1430 can be a remote controller, or a remote display device configured to communicate and operate the spectral sensor 110, of FIG. 1. In some embodiments, a computing device 1430 can include a server or a network device such as a hub, a bridge, a switch, or a router, connecting the computing device 1410 to a data network such as the Internet.

In some uses, the I/O interface 1440 supports an input device and/or an output device (not shown). In some uses, the input device and the output device are integrated into the same hardware, e.g., as in a touch screen. In some uses, such as in a server context, there is no I/O interface 1440 or the I/O interface 1440 is not used. In some uses, additional other components 1480 are in communication with the computer system 1410, e.g., external devices connected via a universal serial bus (USB).

The other devices 1480 can include an I/O interface 1440, external serial device ports, and any additional co-processors. For example, a computing device 1410 can include an interface (e.g., a universal serial bus (USB) interface, or the like) for connecting input devices (e.g., a keyboard, microphone, mouse, or other pointing device), output devices (e.g., video display, speaker, refreshable Braille terminal, or printer), or additional memory devices (e.g., portable flash drive or external media drive). In some implementations an I/O device is incorporated into the computing device 1410, e.g., a touch screen on a tablet device. In some implementations, a computing device 1410 includes an additional device 1480 such as a co-processor, e.g., a math co-processor that can assist the processor 1450 with high precision or complex calculations.

Exemplary technical effects of the systems and methods described herein include, by way of non-limiting example, a system and method for characterizing spectral emission using a broad-band spectrometer provide combustor operators with an improved understanding of a combustion reaction. Advantageously, an improved understanding of a combustion reaction provides the operator with, for example, the ability to determine a flame temperature, a combustion efficiency, fuel-air ratio, and/or a plurality of combustion contaminants and emissions present in a combustion reaction. This improved understanding solves the problem of current spectral emission monitoring systems, which do not provide operators with the information described above in a near real-time, actionable format that enables operators to make informed short term and long-term decisions in regard to operation of a combustor.

Certain exemplary embodiments have been described to provide an overall understanding of the principles of the structure, function, manufacture, and use of the systems, devices, and methods disclosed herein. One or more examples of these embodiments have been illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment can be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

The subject matter described herein can be implemented in optical photon collection, analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*)*.* Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing device that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, can be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language can correspond to the precision of an instrument for measuring the value. Here and throughout the specification and claims, range limitations can be combined and/or interchanged, such ranges are identified and include all the sub-ranges contained therein unless context or language indicates otherwise.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "approximately" includes within 1, 2, 3, or 4 standard deviations. In certain embodiments, the term "about" or "approximately" means within 50%, 20%, 15%, %, 9%, 8%, 7%, 6%, 5%, 4%, 3%, 2%,1%, 0.5%, or 0.05% of a given value or range. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

One skilled in the art will appreciate further features and advantages of the invention based on the above-described embodiments. Accordingly, the present application is not to be limited by what has been particularly shown and described, except as indicated by the appended claims. All publications and references cited herein are expressly incorporated by reference in their entirety.

## Claims

1. A method comprising:
receiving, from a spectral sensor, a data set characterizing spectral emission from a flame, wherein the data comprises a range of wavelengths and a corresponding range of intensities;
determining one or more functions configured to reduce the data;
determining, based on the one or more functions, a baseline emission subset of the data and a peak subset of the data; and
determining, based on the peak subset of the data, one or more parameters of interest.

2. The method of claim 1, wherein the peak subset is determined by subtracting the baseline emission subset from the data set.

3. The method of claim 1, wherein the sensor has a spectral resolution of less than 20 nanometers, a maximum signal-to-noise ratio greater than 200, a wavelength drift of less than 0.3 nanometers, and a relative stability between spectral features of less than 5%.

4. The method of claim 1, wherein the peak subset of the data comprises data characterizing one or more peaks of spectral emission at one or more wavelengths within the range of wavelengths and one or more intensities at each of the corresponding one or more wavelengths.

5. The method of claim 4, further comprising comparing the one or more peaks of spectral emission to one or more predetermined parameters of interest.

6. The method of claim 1, wherein the one or more parameters of interest comprise one or more long-term parameters of interest comprising any of a Nitrogen Oxide emission, a Carbon Oxide emission and an alkali content.

7. The method of claim 1, wherein the one or more parameters of interest comprise one or more dynamic parameters of interest comprising any of a combustion temperature, an air-fuel ratio, a hydrogen-methane concentration and combustion acoustics.

8. The method of claim 1, further comprising providing the one or more parameters of interest to a user interface display.

9. The method of claim 8, wherein the providing further comprises providing a dynamic plot of a continuum of the range of wavelengths versus the range of intensities as they dynamically change with respect to time.

10. A system comprising:
a spectral sensor configured to acquire data characterizing spectral emission from a flame, wherein the data comprises a range of wavelengths and a corresponding range of intensities; and
a computing device including at least one data processor and a memory storing instructions which, when executed by the at least one processor, cause the at least one processor to perform operations comprising
receiving the data from the spectral sensor,
determining one or more functions configured to reduce the data,
determining, based on the one or more functions, a baseline emission subset of the data and a peak subset of the data; and
determining, based on the peak subset of the data, one or more parameters of interest.

11. The system of claim 10, wherein the peak subset is determined by subtracting the baseline emission subset from the data set.

12. The system of claim 10, wherein the spectral sensor has a spectral resolution of less than 20 nanometers, a maximum signal-to-noise ratio greater than 200, a wavelength drift of less than 0.3 nanometers, and a relative stability between spectral features of less than 5%.

13. The system of claim 10, wherein the peak subset of the data comprises data characterizing one or more peaks of spectral emission at one or more wavelengths within the range of wavelengths and one or more intensities at each of the corresponding one or more wavelengths.

14. The system of claim 13, wherein the processor is further configured to perform operations comprising comparing the one or more peaks of spectral emission to one or more predetermined parameters of interest.

15. The system of claim 10, wherein the one or more parameters of interest comprise one or more long-term parameters of interest comprising any of a Nitrogen Oxide emission, a Carbon Oxide emission and an alkali content.

16. The system of claim 10, wherein the one or more parameters of interest comprise one or more dynamic parameters of interest comprising any of a combustion temperature, an air-fuel ratio, a hydrogen-methane and combustion acoustics.

17. The system of claim 10, further comprising:
a user interface display communicatively coupled to the computing device, wherein the processor is further configured to provide the one or more parameters of interest to the user interface display.

18. The system of claim 17, wherein the providing further comprises providing a dynamic plot of a continuum of the range of wavelengths versus the range of intensities as they dynamically change with respect to time.

19. The system of claim 10, wherein the one or more functions are stored within the memory and further comprise one or more machine learning algorithms.

20. The system of claim 10, further comprising:
a light transmitting device configured to transmit light from a combustion chamber to the spectral sensor; and
an analog to digital converter communicatively coupled to the spectral sensor and the computing device.
